# EUROPÄISCHE PATENTANMELDUNG

(11) **EP 2 145 682 A1**
(43) Veröffentlichungstag der Anmeldung: **20.01.2010**
(21) Anmeldenummer: 08012980.2
(22) Anmeldetag: 18.07.2008
(51) Int. Cl.: B01L 3/00, F04B 19/00, F04F 1/06, F04F 5/14

(54) **Testelement zur Analyse einer Körperflüssigkeitsprobe auf einen darin enthaltenen Analyten, Analysesystem und Verfahren zur Steuerung der Bewegung einer in einem Kanal eines Testelements enthaltenen Flüssigkeit**

(71) Anmelder: Roche Diagnostics GmbH, 68305 Mannheim (DE); F.HOFFMANN-LA ROCHE AG, 4070 Basel (CH)
(72) Erfinder: Augstein, Manfred, 68305 Mannheim (DE); Wuerl, Susanne, 68167 Mannheim (DE)

(57) **Zusammenfassung**

Analysesystem zur Analyse einer Körperflüssigkeitsprobe auf einen darin enthaltenen Analyten umfassend ein Testelement (3), das jeweils ein Gehäuse (15) und einen von dem Gehäuse (15) umschlossenen Analysefunktionskanal (16) aufweist, und ein Auswertegerät (2) mit einer Messstation (6) zum Messen einer für das Analyseresultat charakteristischen Messgröße an der Messzcne (19) des Testelements (3) und mit einer vorzugsweise rotierbaren Halterung zum Halten eines Testelements (3), wobei das Testelement (3) einen Luftströmungskanal (25) mit zwei Erweiterungsabschnitten (26a,b) und einem zwischen diesen Erweiterungsabschnitten (26a,b) angeordneten engen Abschnitt (27) aufweist, wobei die Erweiterungsabschnitte (26a,b) eine im Vergleich zu dem engen Abschnitt (27) in Richtung von diesem weg zunehmende Querschnittsfläche aufweisen, und ein Verbindungskanal (24) zwischen dem engen Abschnitt (27) und dem Analysefunktionskanal (16) derart angeordnet ist, dass eine Luftaustauschverbindung gebildet wird, der Luftströmungskanal (25) derart angeordnet ist, dass ein mittels einer durch den Luftströmungskanal (25) fließenden Luftströmung erzeugter Unterdruck auf den Analysefunktionskanal (16) wirkt.

## Beschreibung

Die Erfindung betrifft ein Testelement und ein Analysesystem zur Analyse einer Körperflüssigkeitsprobe auf einen darin enthaltenen Analyten sowie ein Verfahren zum Steuern der Bewegung einer in einem Kanal eines Testelements zur Analyse einer Körperflüssigkeit enthaltenen Flüssigkeit. Die Analyse der Körperflüssigkeit findet in der Regel zu medizinischen Zwecken statt.

Im Bereich der medizinischen Analytik wird prinzipiell zwischen Analysesystem mit "Nassreagenzien" und Analysesystemen mit "Trockenreagenzien" unterschieden. Analysesysteme, die mit Nassreagenzien arbeiten, verwenden zur Durchführung einer Analyse technisch aufwendige, große, netzbetriebene Analysegeräte, die die erforderlichen vielfältigen Bewegungen der beteiligten Elemente ermöglichen.

Bei den mit Trockenreagenzien arbeitenden Analysesystemen sind diese Reagenzien üblicherweise in ein Testelement integriert, das beispielsweise als Teststreifen ausgebildet sein kann. Bei der Verwendung dieser Systeme löst die flüssige Probe die Reagenzien in dem Testelement, wobei die Reaktion der Probe und Reagenzien zu einer Änderung einer Messgröße führt. Die Messgröße kann an dem Testelement selbst mit optischen oder elektrochemischen Messverfahren gemessen werden.

Nassanalysesysteme ermöglichen mit leistungsfähigen Geräten die Durchführung mehrstufiger Reaktionssequenzen (Testprotokolle), wie sie zum Beispiel immunchemische Analysen erfordern, bei deren mehrstufigem Reaktionsablauf eine "bound/free-Trennung" (nachfolgend "b/f-Trennung"), also eine Trennung einer gebundenen und einer freien Phase, notwendig ist. Es sind zahlreiche Testprotokolle zur Bestimmung einer Vielzahl von Analyten bekannt, die sich in vielfältiger Weise unterscheiden. Ihnen ist gemeinsam, dass sie eine aufwendige Handhabung mit mehreren Reaktionsstufen bedingen.

Ein kontrollierter und mehrstufiger Reaktionsablauf ist normalerweise mit Teststreifen und ähnlichen Analyseelementen nicht möglich. Teststreifenartige Testelemente, ermöglichen keine genaue Steuerung einzelner Reaktionsschritte; insbesondere keine Steuerung der zeitlichen Abfolge der einzelnen Reaktionsschritten. Nasschemische Laborsysteme bieten diese Möglichkeit. Sie sind aber für viele Anwendungsfälle zu groß, zu teuer und zu aufwendig in der Handhabung.

Die Lücke sollen Analyseelemente mit steuerbaren Testelementen schließen. Diese Testelemente sind so ausgebildet, dass darin mindestens ein extern (d.h. mittels eines Elements außerhalb des Testelements selbst) gesteuerter Flüssigkeitstransport stattfindet. Die externe Steuerung kann auf der Anwendung von Druckunterschieden (Überdruck oder Unterdruck) oder der Änderung von Kraftwirkungen (z.B. Lageänderung oder Beschleunigungskräfte) basieren. Häufig erfolgt die externe Steuerung durch Zentrifugalkräfte, die auf ein rotierendes Testelement in Abhängigkeit der Geschwindigkeit der Rotation einwirken.

Steuerbare Testelemente haben üblicherweise ein Gehäuse, das aus einem formstabilen Kunststoffmaterial besteht, und wenigstens einen von dem Gehäuse umschlossenen Analysefunktionskanal. Der Analysefunktionskanal besteht vielfach aus einer Aufeinanderfolge mehrerer Kanalabschnitte und dazwischenliegenden im Vergleich zu den Kanalabschnitten erweiterten Kammern. Die Struktur des Kanals einschließlich der Abschnitte und Kammern wird durch eine Profilierung der Kunststoffteile definiert. Diese Profilierung wird insbesondere durch Spritzgießtechniken oder Heißprägen, unter Umständen auch durch Lithographieverfahren, erzeugt.

Ein Analysefunktionskanal in diesem Sinne ist jeder Kanal, der in einem mittels des Testelementes durchgeführten Analyseverfahren eine Flüssigkeitsktransportfunktion erfüllt, die zu der Analyse beiträgt. Diese Funktion kann z.B. im gezielten (zeitlich gesteuerten) Transportieren einer Flüssigkeit, insbesondere einer Probenflüssigkeit, einer (mindestens ein Reagenz enthaltenden) Reagenzflüssigkeit, eines durch Mischen von Probe und Reagenz erzeugten Reaktionsgemisches oder einer Spül- oder Waschflüssigkeit (z.B. zum Abwaschen überflüssiger Reaktionsteilnehmer) bestehen. Das gezielte Transportieren umfasst die Funktionen "Anhalten", "Weitertransportieren in eine definierte Richtung ("Vorwärtsrichtung")", "Transportieren in die Gegenrichtung". Dabei können verschiedene in dem Analysefunktionskanal wirkende Kräfte, insbesondere die Kapillarkraft, die Zentrifugalkraft und die Schwerkraft zur Steuerung einer Bewegung der Flüssigkeit in dem Analysefunktionskanal genutzt werden.

Analysesysteme mit steuerbaren Testelementen sind beispielsweise aus folgenden Publikationen bekannt:
US-Patent 4,456,681
US-Patent 4,580,896
US-Patent 6,030,581
US-Patent 4, 814,144

Analysesysteme mit steuerbaren Testelementen ermöglichen eine Miniaturisierung von Tests, die bisher nur mit großen Laborsystemen durchgeführt werden konnten. Eine Parallelisierung von Vorgängen ist nun durch Aufbringen mehrerer, vorzugsweise gleicher, Strukturen für eine parallele Bearbeitung gleicher oder ähnlicher Analysen aus einer Probe bzw. gleicher Analysen aus verschiedenen Proben möglich. Ein weiterer Vorteil ist darin zu sehen, dass die Testelemente in der Regel mittels etablierter Herstellungsverfahren hergestellt und mittels bekannter Auswerteverfahren ausgewertet werden können. Auch bei chemischen oder biochemischen Komponenten solcher Testelemente kann meist auf bekannte Verfahren und Produkte zurückgegriffen werden.

Trotz dieser Vorteile besteht weiterer Verbesserungsbedarf. Insbesondere besteht ein Bedürfnis, die Steuerung der Bewegung einer Flüssigkeit innerhalb der Testelemente zu verbessern.

Auf dieser Grundlage liegt der Erfindung die Aufgabe zugrunde, ein Testelement und ein Analysesystem mit Testelementen zur Verfügung zu stellen, die einen verbesserten Flüssigkeitstransport ermöglichen.

Gelöst wird diese Aufgabe durch ein Testelement zur Analyse einer Körperflüssigkeitsprobe auf einen darin enthaltenen Analyten mit den Merkmalen des Anspruchs 1, einem Analysesystem zur Analyse einer Körperflüssigkeitsprobe mit den Merkmalen des Anspruchs 10 und durch ein Verfahren zum Steuern der Bewegung einer in einem Kanal eines Testelements zur Analyse einer Körperflüssigkeitsprobe enthaltenen Flüssigkeit mit den Merkmalen des Anspruchs 15.

Das erfindungsgemäße Testelement umfasst eine von dem Gehäuse umschlossenen Analysefunktionskanal, einen Luftströmungskanal mit zwei Erweiterungsabschnitten und einen dazwischenliegenden engen Abschnitt sowie einen Verbindungskanal, der den engen Abschnitt des Luftströmungskanals und den Analysefunktionskanal so verbindet, dass ein Luftaustausch zwischen ihnen stattfindet. Eine durch den Luftströmungskanal fließende Luftströmung erzeugt über die Luftaustauschverbindung des Verbindungskanals einen Unterdruck, der auf den Analysefunktionskanal wirkt. Durch diese entstehende Saugwirkung wird eine in dem Analysefunktionskanal befindliche Körperflüssigkeitsprobe angesaugt. Durch Steuerung des Unterdrucks ist es somit möglich, die Luftverhältnisse innerhalb des Analysefunktionskanals zu beeinflussen, insbesondere den in dem Kanal herrschenden Druck.

In einer bevorzugten Ausführungsform umfasst der Analysefunktionskanal wenigstens einen mikrofluidischen Kanalabschnitt. Ein mikrofluidischer Kanalabschnitt oder Kanal im Sinne der Erfindung hat vorzugsweise einen Wandabstand von maximal 300 µm. Der Querschnitt ist in der Regel nicht rund. Bei einer länglichen, vorzugsweise rechteckigen Querschnittsform kann die längere Dimension (Tiefe) des Kanals sehr viel größere Werte haben. Entscheidend ist, dass der Abstand (d.h. die kürzeste Distanz) benachbarter Wände maximal den angegebenen Wert hat. Selbstverständlich kann das Testelement neben dem mikrofluidischen Kanal auch Kanäle bzw. Kanalabschnitte mit größeren Dimensionen enthalten, in denen keine oder nur sehr geringe Kapillarkräfte auf die Flüssigkeit wirken. Entscheidend ist, dass mindestens ein Kanal, vorzugsweise mehrere Kanäle bzw. Kanalabschnitte des Testelementes die angegebenen Dimensionen einhalten.

Bevorzugt strömt durch den Luftströmungskanal Umgebungsluft aus der Umgebung des Testelements. In diesem Fall muss also keine zusätzliche Luftzufuhr vorgesehen sein. Beispielsweise strömt die Umgebungsluft dann durch den Luftströmungskanal, wenn sich das Testelement bewegt. Besonders bevorzugt rotiert das Testelement um eine Rotationsachse, die sich durch das Testelement erstreckt. Der Luftströmungskanal ist so ausgerichtet, dass die Umgebungsluft während der Rotation des Testelements durch den Luftströmungskanal strömen kann. Dazu hat er eine tangentiale Komponente zur Rotationsachse. Durch eine entsprechende Anordnung des Luftströmungskanals kann festgelegt werden, wie groß der maximal erzeugte Unterdruck in dem Verbindungskanal und in dem Analysefunktionskanal bei einer bestimmten Rotationsgeschwindigkeit ist. Je größer die Tangentialkomponente des Strömungskanals ist, desto größer ist der erzeugbare Unterdruck in dem Verbindungskanal. Bei einer tangentialen Ausrichtung des Luftströmungskanals (Flächennormale der Öffnungsfläche ist parallel zu Geschwindigkeitsvektor) kann der größtmögliche Unterdruck erzeugt werden.

Damit die Umgebungsluft möglichst ungehindert und effizient durch den Strömungskanal strömen kann, ist er bevorzugt an der Oberseite und/oder der Unterseite des Gehäuses des Testelements angeordnet. Beispielsweise kann der Luftströmungskanal so angeordnet sein, dass die Öffnungsfläche eines Lufteintritts des Luftströmungskanals senkrecht zur Oberseite des Gehäuses des Testelements angeordnet ist. Der Lufteintritt wird bei dieser Anordnung maximal. Der Luftströmungskanal kann beispielsweise (im wesentlichen) parallel zur Oberseite des Gehäuses verlaufen.

Der Luftströmungskanal ist bevorzugt derart an der Oberseite oder Unterseite des Testelementgehäuses positioniert, dass sein enger Abschnitt oberhalb bzw. unterhalb eines Analysefunktionskanals angeordnet ist. Der den Analysefunktionskanal und den engen Abschnitt des Luftströmungskanals verbindende Verbindungskanal ist in diesem Fall möglichst kurz, so dass der Luftaustausch zwischen den beiden Kanälen besonders gut ist und ein großer Unterdruck schon bei geringen Strömungsgeschwindigkeiten der den Luftströmungskanal durchströmenden Luft erzeugt werden kann. Selbstverständlich sind auch Anwendungsfälle denkbar, bei denen ein begrenzter Unterdruck in dem Analysefunktionskanal erzeugt werden soll, oder eine detektierbare Wirkung auf die in dem Analysefunktionskanal angeordnete Flüssigkeit erst bei einer vorgegebenen (relativ hohen) Geschwindigkeit des Testelements wirken soll. In diesem Fall ist der Verbindungskanal verlängert, so dass der enge Abschnitt des Luftströmungskanals von dem Analysefunktionskanal weiter entfernt liegt. Durch geeignete Dimensionierung und Positionierung des Luftströmungskanals im Verhältnis zum Analysefunktionskanal lässt sich somit von vornherein der zu erzielende Unterdruck festlegen.

Zur Zugabe einer Flüssigkeit in einen Kanal eines Testelements weisen bekannte Testelemente Zugabeöffnungen auf, die mit einem Kanal, beispielsweise einem Analysefunktionskanal, verbunden sind. Beim Dosieren der Flüssigkeit in die Zugabeöffnung des Kanals ergibt sich häufig das Problem, dass sich Luftblasen bilden, durch die die Aufnahme der Flüssigkeit (Flüssigkeitsprobe wie z.B. Blut) gestört oder gehemmt wird. Auch kann durch eine schlechte Entlüftung des Kanals der Weitertransport der Flüssigkeit negativ beeinflusst werden, beispielsweise durch ein ungleichmäßiges oder zeitlich verzögertes Weiterströmen der Flüssigkeit in dem Kanal.

Um die Entlüftung in dem Kanal zu verbessern, ist bekannt, einen Entlüftungskanal in der Nähe der Zugabeöffnung anzuordnen, um eine Entlüftung des Kanals zu realisieren. Der Entlüftungskanal ist hydrophob, so dass in ihm keine Flüssigkeit transportiert wird. Er dient insbesondere dazu, um die durch die Zugabe der Flüssigkeit in den Kanal verdrängte Luft oder ein anderes gasförmiges Medium aus dem Kanal heraus zu transportieren. Da das Gehäuse des Testelements in der Regel aus Kunststoff hergestellt ist, sind die Kanalwände in dem Entlüftungskanal ohnehin hydrophob. Eine spezielle Hydrophobisierung der in der Analysetechnik für medizinische Zwecke üblichen Kunststoffen ist deshalb nicht notwendig.

Im Rahmen der Erfindung wurde festgestellt, dass sich durch die Saugwirkung nicht nur die Bewegung der Körperflüssigkeitsprobe in dem Kanal steuern lässt, sondern auch die Entlüftung des Kanals verbessert werden kann. In einer bevorzugten Ausführungsform des erfindungsgemäßen Testelements ist der Verbindungskanal zwischen dem Analysefunktionskanal und dem Luftströmungskanal ein solcher Entlüftungskanal. Die Entlüftungswirkung des Entlüftungskanals wird durch die in dem Verbindungskanal beschriebene Saugwirkung verstärkt. Die Entlüftung wird optimiert.

Zur Entlüftung eines Probenanalysekanals sind erfindungsgemäß mehrere Schritte notwendig. Das Testelement mit einem Gehäuse hat einen Luftströmungskanal mit zwei Erweiterungsabschnitten und einem dazwischen liegenden engen Abschnitt sowie einen Lüftungskanal, der zwischen dem engen Abschnitt und dem Analysefunktionskanal angeordnet ist und durch den ein Luftaustausch stattfindet. Zur Entlüftung wird erfindungsgemäß eine Luftströmung erzeugt, die in einem weiteren Schritt durch den Luftströmungskanal derart gelenkt wird, dass die Luftströmung den engen Abschnitt durchströmt. In einem weiteren Schritt wird in dem Entlüftungskanal durch die Luftströmung ein Unterdruck erzeugt, der ein in dem Analysefunktionskanal vorhandenes gasförmiges Medium heraussaugt. Hierdurch wird das Einbringen einer Flüssigkeit in den Analysefunktionskanal erleichtert. Eine ungehinderte und blasenfreie Zugabe einer Flüssigkeit in den Analysefunktionskanal wird ermöglicht.

Um die Bewegung einer in einem Kanal eines Testelements zur Analyse einer Körperflüssigkeitsprobe enthaltenen Flüssigkeit zu steuern, sind erfindungsgemäß mehrere Schritte notwendig, die automatisch bzw. automatisiert ablaufen. Das Testelement umfasst dabei ein Gehäuse und einen von dem Gehäuse umschlossenen Analysefunktionskanal, einen Luftströmungskanal mit zwei Erweiterungsabschnitten und einem dazwischen angeordneten engen Abschnitt sowie einen Verbindungskanal, der zwischen dem engen Abschnitt und dem Analysefunktionskanal angeordnet ist. Der enge Abschnitt und der Analysefunktionskanal stehen durch den Verbindungskanal in Luftaustauschverbindung zueinander. Die Erweiterungsabschnitte haben im Vergleich zu dem engen Abschnitt eine größere Querschnittsfläche, die in Richtung von dem engen Abschnitt weg zunimmt.

Zum Steuern der Bewegung der Probe wird erfindungsgemäß eine Luftströmung erzeugt. Die Luftströmung wird derart durch den Luftströmungskanal gelenkt, dass sie durch den engen Abschnitt strömt. Bevorzugt strömt sie dabei durch einen der beiden Erweiterungsabschnitte in den Luftströmungskanal ein, passiert den engen Abschnitt und strömt durch den anderen Erweiterungsabschnitt wieder heraus.

In einem weiteren Verfahrensschritt wird in dem Verbindungskanal, der den Analysefunktionskanal und den engen Abschnitt des Luftströmungskanals miteinander verbindet, ein Unterdruck erzeugt. Der Unterdruck wirkt derart auf den Analysefunktionskanal, dass die darin enthaltene Flüssigkeitsprobe in ihrer Lage beeinflusst wird. Auf diese Weise kann die Bewegung der Flüssigkeitsprobe geändert werden. Nicht nur die Position der Flüssigkeitsprobe (Richtung ihrer Bewegung) ist steuerbar, sondern auch die Strömungsgeschwindigkeit der Flüssigkeitsprobe in dem Analysefunktionskanal. Die Flüssigkeit kann beschleunigt oder abgebremst werden. Dabei kann die Flüssigkeit derart verlangsamt werden, dass sie zum Stillstand kommt.

Bevorzugt umfasst das erfindungsgemäße automatische Verfahren einen weiteren Schritt, in dem eine Flüssigkeitsprobe durch eine Probenzugabeöffnung in den Analysefunktionskanal dosiert wird. Dieser Schritt wird bevorzugt vor den anderen Schritten ausgeführt.

Die Erfindung wird nachfolgend anhand von den in den Figuren dargestellten bevorzugten Ausführungsformen näher erläutert. Die darin dargestellten Besonderheiten können einzeln oder in Kombination verwendet werden, um bevorzugte Ausgestaltungen der Erfindung zu schaffen. Die beschriebenen Ausführungsformen stellen keine Einschränkung der Allgemeinheit des in den Ansprüchen definierten Gegenstands dar. Es zeigen:
- Fig. 1: ein Prinzipbild des erfindungsgemäßen Analysesystems;
- Fig. 2: ein Prinzipbild eines erfindungsgemäßen Testelements;
- Fig. 3a-d: verschiedene Prinzipansichten eines weiteren Testelements;
- Fig. 4: eine schematische Ansicht des Testelements innerhalb eines Analysesystems.

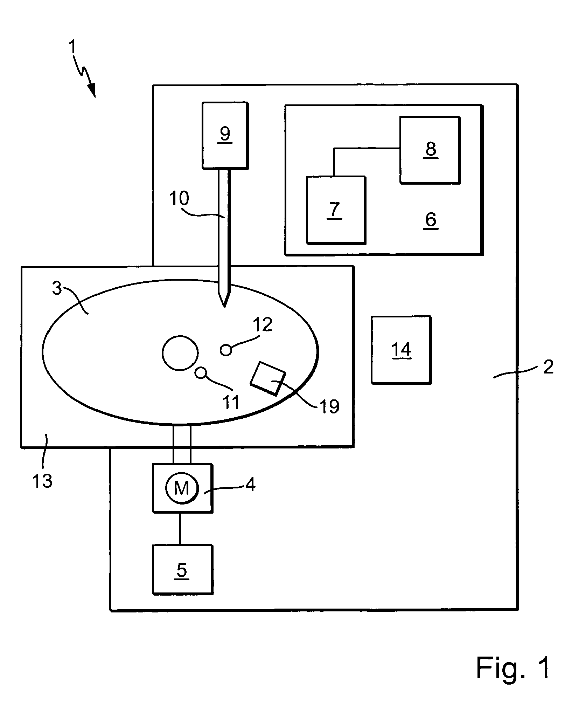

Figur 1 zeigt eine Ausführungsform des erfindungsgemäßen Analysesystems 1 zur Analyse einer Körperflüssigkeitsprobe auf einen darin enthaltenen Analyten mit einem Auswertegerät 2 und einem steuerbaren (disposiblen) Testelement 3, das um eine Rotationsachse rotiert. Das Testelement 3 ist in einer (nicht dargestellten) rotierbaren Halterung gehalten, die Teil des Auswertegeräts 2 ist.

Das Auswertegerät 2 hat einen Antrieb 4 für die Bewegung des Testelements 3 um die Rotationsachse. Durch die Rotationsbewegung wird der Transport einer Flüssigkeit, beispielsweise einer Probenflüssigkeit, in dem Testelement 3 extern gesteuert. Mittels einer Antriebssteuerung 5 wird der Antrieb 4 derart gesteuert, dass die Drehrichtung und die Drehgeschwindigkeit geregelt werden. Auf diese Weise lassen sich die Strömungsgeschwindigkeit, die Strömungsrichtung und die Verweildauer von Flüssigkeiten in bestimmten Abschnitten des Testelements festlegen

Das Auswertegerät 2 schließt eine Messstation 6 zum Messen einer für das Analyseresultat charakteristischen Messgröße an einer Messzone 19 des Testelements 3 ein. Die Messstation umfasst bevorzugt eine optische Messeinrichtung 7 und eine Auswerteeinheit 8, um die charakteristische Messgröße zu bestimmen. Vorzugsweise schließt die optische Messeinrichtung 7 ein Messgerät zur Fluoreszenzmessung mit ortsauflösender Detektion ein, bei der beispielsweise durch eine zweidimensionale Auswerteoptik die Beleuchtung an der Messzone des Testelements 3 und/oder die Anregung von optisch detektierbaren Markierungen in der Testzone mittels einer LED oder eines Lasers stattfindet. Die Detektion geschieht beispielsweise über eine CCD- oder eine CMOS-Optik. Selbstverständlich können auch andere optische Verfahren verwendet werden. Bevorzugt ist das Testelement 3 für die Messung in einer Messposition; es befindet sich also in Ruhe. Allerdings ist es auch möglich, die Messung während einer Bewegung des Testelements 3 durchzuführen. Dies ist beispielsweise bei geringen Rotationsgeschwindigkeiten (bis etwa 600 U/min) möglich.

In einer bevorzugten Ausführungsform kann das Auswertegerät 2 optional mit einer Dosierstation 9 ausgestattet sein, die eine Dosiernadel 10 hat, um eine Flüssigkeit in das Testelement 3 zu applizieren. Die Dosierstation 9 kann dazu ein oder mehrere Flüssigkeitsreservoirs (hier nicht dargestellt) umfassen, in denen beispielsweise verschiedene Flüssigkeiten gelagert sein können. Diese Flüssigkeiten, die mittels der Dosierstation 9 dosiert werden, können beispielsweise die den Analyten enthaltene Probenflüssigkeit (z.B. Blut), eine Waschflüssigkeit, ein Waschpuffer oder eine Spülflüssigkeit sein, die in eine Zugabeöffnung 11,12 dosiert werden können.

Bevorzugt befindet sich das Testelement 3 in einer Dosierposition in dem Analysegerät 2, während eine Flüssigkeit in eine Zugabeöffnung 11,12 mittels der Dosierstation dosiert wird. Eine manuelle Zugabe einer Flüssigkeit in die Öffnungen 11,12 durch den Benutzer (beispielsweise mittels Pipette) ist ebenfalls denkbar.

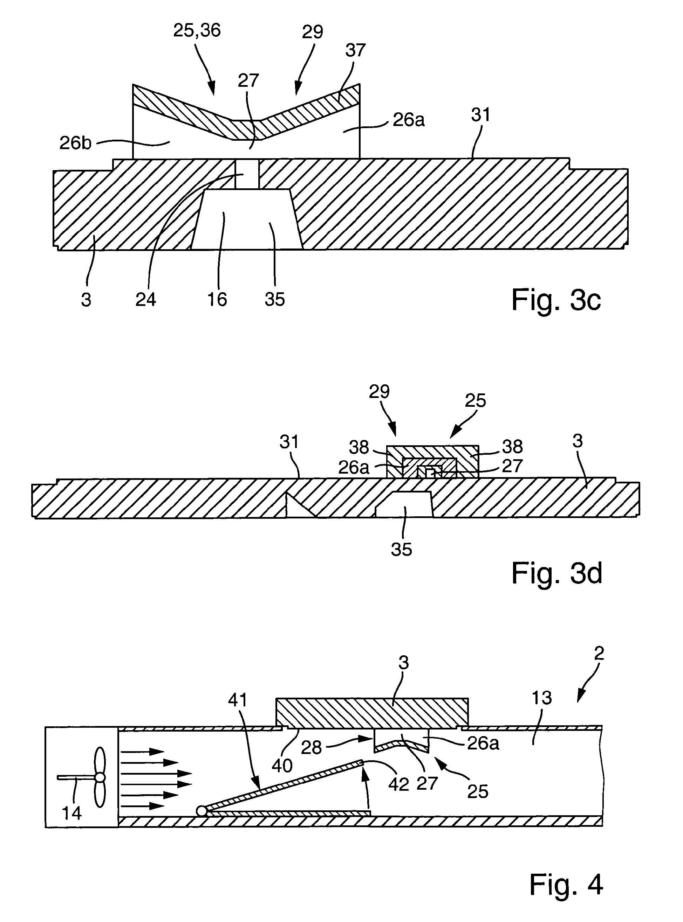

Das Auswertegerät 2 umfasst in einer bevorzugten Ausführungsform einen Aufnahmeraum 13, in dem das Testelement 3 rotiert. In einer ebenfalls bevorzugten Ausführungsform des Auswertegeräts 2 schließt es eine externe Strömungsquelle, beispielsweise ein Lüfter 14, ein, der bevorzugt Teil einer Temperiereinheit sein kann. Die Temperiereinheit dient zum Heizen des Testelements 3, der Flüssigkeitsprobe oder einer anderen Flüssigkeit (flüssiges Medium), das in das Testelement 3 appliziert werden kann. Der Lüfter kann eine externe Luftströmung erzeugen, dessen Verwendung in Bezug mit Figur 4 näher erläutert wird.

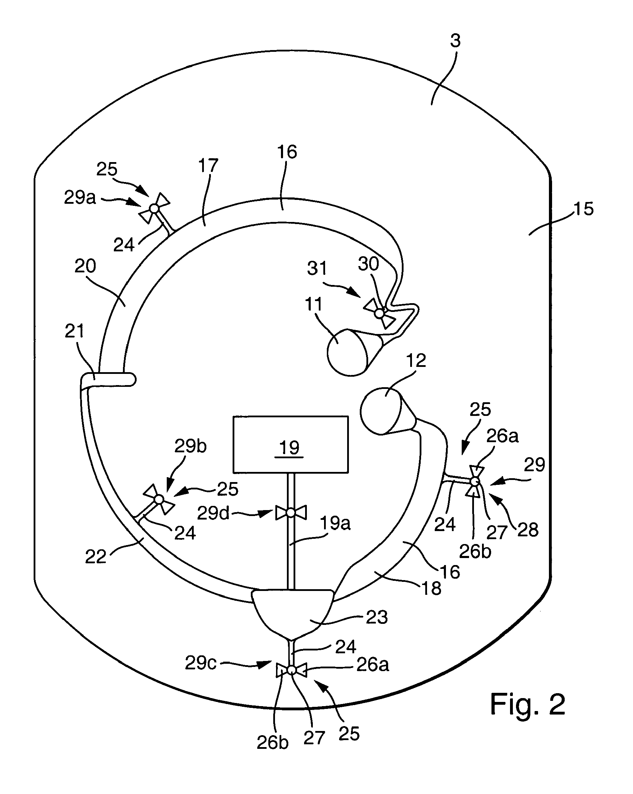

Figur 2 zeigt eine Ausführungsform eines Testelements 3, das ein Gehäuse 15 mit einem Substrat und einer zentralen Bohrung hat, die als Antriebsloch zur Halterung in dem Auswertegerät 2 dient. Neben dem Substrat enthält das scheibenförmige Testelement 3 auch eine (hier nicht dargestellte) Deckschicht. Grundsätzlich kann die Deckschicht ebenfalls fluidische Strukturen tragen, in der Regel wird sie jedoch Öffnungen für die Zugabe von Flüssigkeiten oder Ventilöffnungen aufweisen.

Das Gehäuse 15 des Testelements weist fluidische oder mikrofluidische sowie chromatographische Strukturen auf. Die Probenflüssigkeit, insbesondere Vollblut, wird dem Testelement 3 über die Probenzugabeöffnung 11 zugegeben.

Das Testelement 3 hat zwei (wenigstens teilweise mikrofluidische) Analysefunktionskanäle 16, von denen einer ein Probenanalysekanal 17 und der andere ein Spülflüssigkeitskanal 18 ist. Der Spülflüssigkeitskanal 18 erstreckt sich von der Zugabeöffnung 12 zu einer Sammelzone 23. Der Probenanalysekanal 17 schließt in Strömungsrichtung an seinem Anfang die Probenzugabeöffnung 11 und an seinem Ende eine Messzone 19 ein. Dazwischen umfasst der Probenanalysekanal 17 einen mikrofluidischen Primärkanalabschnitt 20, einen Kapillarstopp 21, einen mikrofluidischen Sekundärkanalabschnitt 22 und die Sammelzone 23, die eine Sammelkammer ist. Der Kapillarstopp 21 kann als geometrisches Ventil oder hydrophobe Barriere ausgebildet sein. Der Sekundärkanalabschnitt 22 führt einen durch den Kapillarstopp 21 abgemessene Probenmenge, die z.B. durch Zentrifugalkräfte mittels der Rotationsgeschwindigkeit des Testelements 3 gesteuert wird.

Figur 2 ist zu entnehmen, dass das Testelement 3 mehrere Luftströmungskanäle 25 umfasst, die jeweils über einen Verbindungskanal 24 mit dem Analysefunktionskanal 16 verbunden sind. Der Luftströmungskanal 25 schließt zwei Erweiterungsabschnitte 26a,b und einen zwischen den Abschnitten 26a,b angeordneten engen Abschnitt 27 ein. Die Erweiterungsabschnitte 26a,b weisen jeweils eine im Vergleich zu dem engen Abschnitt in Richtung von diesem weg zunehmende Querschnittsfläche auf. Der Verbindungskanal 24 ist mit dem engen Abschnitt 27 derart verbunden, dass ein Luftaustausch zwischen dem Analysefunktionskanal 16 und dem Luftströmungskanal 25 gegeben ist.

Der konstruktive Aufbau des Luftströmungskanals 25 entspricht im Prinzip einer Venturidüse 28, die mit dem Verbindungskanal 24 eine Venturianordnung 29 bildet. Der Luftströmungskanal 25 arbeitet folglich nach dem Venturi-Prinzip, wonach die Strömungsgeschwindigkeit in dem engen Abschnitt deutlich größer ist als in den Erweiterungsabschnitten 26a,b. Auf diese Weise wird in dem Verbindungskanal 24 ein Unterdruck erzeugt, der aufgrund der Luftaustauschverbindung auch in dem Analysefunktionskanal 16 wirkt und eine Saugwirkung erzeugt, um eine Flüssigkeit innerhalb des Analysefunktionskanals 16 zu steuern.

Der Probenanalysekanal 17 hat zur Steuerung der Probenflüssigkeit innerhalb des Kanals mehrere Venturianordnungen 29a bis d. Die Venturianordnungen 29a bis c dienen dazu, einen definierten Weiterfluss der Probenflüssigkeit zu steuern. Dabei kann nicht nur die Fließgeschwindigkeit erhöht werden, sie kann auch so verlangsamt werden, dass die Flüssigkeit zum Stillstand kommt. Dies kann insbesondere dann sinnvoll sein, wenn in dem Primärkanalabschnitt 20 Reagenzien in trockener Form angelöst werden sollen. Somit bilden die Venturianordnungen 29a bis c sogenannte Fluid-Stopp&Go-Schalter. Es ist auch möglich, die Flüssigkeit mittels der von dem Luftströmungskanal 25 hervorgerufenen Saugwirkung entgegen der prozessbedingten Strömungsrichtung strömen zu lassen.

Während die Anordnungen 29a bis c zur Beeinflussung der Geschwindigkeit und/oder Richtung der Flüssigkeit dienen, hat die Venturianordnung 29d darüber hinaus eine sogenannte Gatekeeper-Funktion. Durch sie wird der Weiterfluss der Flüssigkeiten aus der Sammelzone 23 durch den Kanalabschnitt 19a zur Messzone 19 gelenkt. Dieser Luftströmungskanal 25 hat somit auch eine Art Weichenfunktion; er stellt sicher, dass beispielsweise eine Spülflüssigkeit aus dem Spülflüssigkeitskanal 18 nicht in den Sekundärkanalabschnitt 22 fließen kann. Der Luftströmungskanal 25 der Anordnung 29d ist direkt oberhalb des Kanalabschnitts 19a angeordnet, so dass der Verbindungskanal 24 sehr kurz ist. Der enge Abschnitt 27 kann nahezu beliebig kurz sein. Er muss nur einen Anschluss des Luftströmungskanals an den Verbindungskanal 24 zum Luftaustausch ermöglichen.

Des weiteren ermöglicht die Venturianordnung 29d ein Strömen der Flüssigkeit entgegen der Zentrifugalkraft, nämlich in Richtung Rotationsachse. Dabei muss die durch den Unterdruck in dem Kanalabschnitt 19a erzeugte Saugkraft größer als die durch die Rotation entstehende Zentrifugalkraft sein. Allerdings kann die Saugwirkung durch Kapillarkräfte unterstützt werden. Somit stellt die durch den Unterdruck erzeugte Kraft eine dritte Kraftkomponente (neben der Zentrifugal- und Kapillarkraft) zur Steuerung der Flüssigkeitsbewegung dar.

Der Figur 2 ist auch zu entnehmen, dass die Luftströmungskanäle 25 der Venturianordnungen 29, 29a bis d derart angeordnet sind, dass sie eine tangentiale Komponente zur Rotationsrichtung aufweisen. Auf diese Weise kann während der Rotation des Testelements 3 Umgebungsluft in die Luftströmungskanäle 25 strömen. Die Luftströmungskanäle sind deshalb in dieser Ausführungsform an der Oberseite des Gehäuses 15 des Testelements 3 angeordnet, von der aus auch die Flüssigkeiten in die Zugabeöffnungen 11,12 dosiert werden.

Am Anfang des Analysefunktionskanals 16 hinter der Zugabeöffnung 11 ist ein Entlüftungskanal 30 angeordnet. Dieser hydrophobe Kanal dient zur Entlüftung des Analysefunktionskanals 16, damit durch die einfließende Flüssigkeit verdrängtes gasförmiges Medium entweichen kann. Die Venturianordnung 31, die den Entlüftungskanal 30 umfasst, schließt einen Luftströmungskanal 25 (wie oben beschrieben) ein. Auf diese Weise wird die Entlüftung des Analysefunktionskanals 16 deutlich verbessert, da die in dem Kanal befindliche Luft herausgesaugt wird und sich keine Luftblasen bilden können.

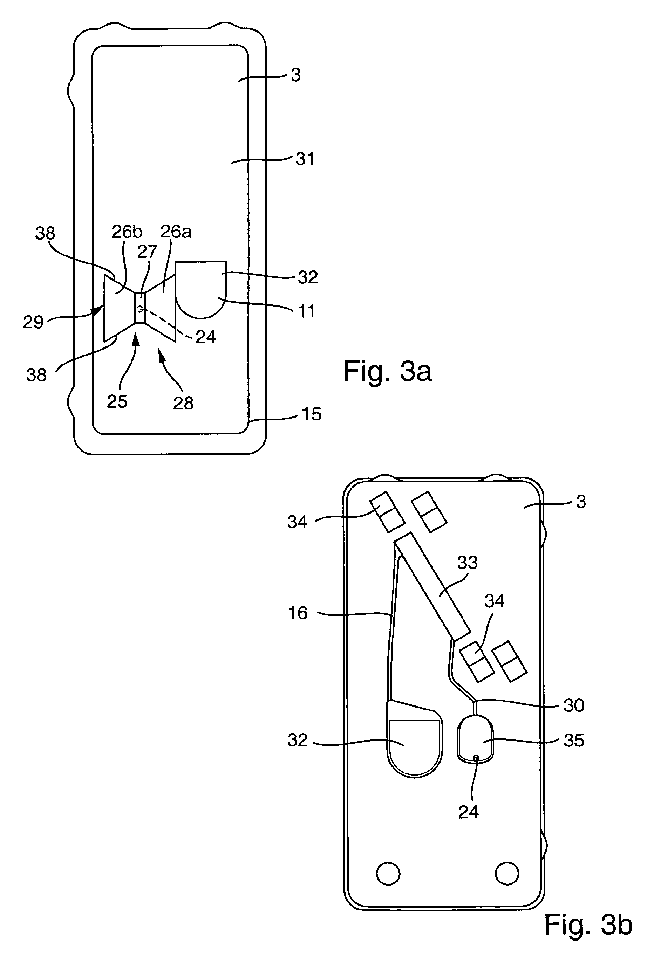

Die Figuren 3a bis d zeigen eine weitere Ausführungsform des erfindungsgemäßen Testelements 3, das hier nicht als runde Scheibe, sondern als rechteckige Platte ausgebildet ist. Diese plattenförmige Scheibe wird in eine Halterung des Auswertegeräts 2 eingesetzt, so dass sie um eine Rotationsachse rotieren kann.

Figur 3a zeigt die Oberseite 31 des Testelementes 3 mit einer Zugabeöffnung 11 und einer Venturidüse 28, die einen Luftströmungskanal 25 einschließt. Deutlich zu erkennen sind die beiden Erweiterungsabschnitte 26a,b und der dazwischen angeordnete enge Abschnitt 27, in dem die Strömungsgeschwindigkeit der ihn durchströmenden Luft erhöht ist.

Figur 3b zeigt einen Schnitt durch das Testelement 3 in der Ansicht von unten. Die Zugabeöffnung 11 führt zu einer Zugabezone 32, an die sich ein Analysefunktionskanal 16 anschließt. Der Analysefunktionskanal 16 mündet in einer Küvette 33, in der die Probenflüssigkeit gelagert wird und mittels einer optischen Auswertung analysiert wird. Das Testelement 3 umfasst dazu zwei Spiegel 34, so dass Licht durch die Küvette 33 geleitet werden kann. Mittels dieser Konstruktion ist eine Transmissionsmessung der in der Küvette 33 enthaltenen Probenflüssigkeit möglich.

Die Küvette 33 weist an dem einen Ende, das dem Zufluss der Probenflüssigkeit gegenüber liegt, einen Entlüftungskanal 30 auf, der eine Luftaustauschverbindung zwischen der Küvette 33 und einer Luftkammer 35 herstellt. Die Luftkammer 35 wird als Windkessel bezeichnet. Sie ist über einen Verbindungskanal 24 mit dem engen Abschnitt 27 des Luftströmungskanals 25 verbunden. Auf diese Weise kann eine einfache, zuverlässige und gesteuerte Entlüftung der Küvette 33 vorgenommen werden.

Figur 3c zeigt die Venturianordnung 29 als Schnittdarstellung durch das Testelement 3 im Detail. Deutlich zu erkennen ist die als Windkessel ausgeführte Luftkammer 35, die über den Verbindungskanal 24 mit der Venturianordnung 29 in Verbindung steht. Der Luftströmungskanal 25 ist als Trichter 36 angeordnet, dessen Bodenfläche durch die Oberseite 31 des Gehäuses 15 des Testelements 3 gebildet wird. Die Oberseite des Trichters 36 wird durch eine Deckplatte 37 abgedeckt, die sich zum engen Abschnitt 27 des Luftströmungskanals 25 neigt. Die beiden (nicht gezeigten) Seitenwände 38 des trichterförmigen Erweiterungsabschnitts 26a,b, die in Figur 3a zu erkennen sind, sind derartig zueinander angeordnet, dass sie vom engen Abschnitt 27 weg auseinanderlaufen.

Dem Fachmann ist klar, dass das Dach bzw. die Deckplatte 37 des Trichters 36 nicht notwendigerweise geneigt sein muss. Selbstverständlich kann sie auch parallel zur Oberseite 31 des Testelementgehäuses 15 angeordnet sein.

Die Erweiterungsabschnitte 26a,b erweitern sich vom engen Abschnitt 27 aus in Längsrichtung bevorzugt stetig. Selbstverständlich ist es auch möglich, dass sich der Erweiterungsabschnitt stufenförmig oder treppenförmig erweitert, wobei bevorzugt mehrere Stufen vorgesehen sind. Denkbar ist jedoch auch, dass die Erweiterung in Längsrichtung mit nur in einer Stufe vorgenommen wird, die zwischen dem Erweiterungsabschnitt 26a,b und dem engen Abschnitt 27 gebildet wird.

Figur 3d zeigt einen Schnitt durch den Luftströmungskanal 25 quer zur Längsrichtung. Deutlich zu erkennen sind die unterschiedlichen Abschnitte des Luftströmungskanals 25 mit dem engen Abschnitt 27 in der Mitte und dem davorliegenden Erweiterungsabschnitt 26a.

Figur 4 zeigt eine Detailansicht des Auswertegeräts 2 aus Figur 1. Hierbei ist der Aufnahmeraum 13 des Auswertegeräts 2 mit einem darin gelagerten Testelement 3 gezeigt. Das Testelement 3 hat an der Unterseite 40 des Gehäuses 15 einen Luftströmungskanal 25, der als Venturidüse 28 funktioniert.

Das Analysegerät 2 schließt bevorzugt ein Luftführungselement ein, das den von dem Lüfter 14 erzeugten Luftstrom in Richtung des Luftströmungskanals 25 des Testelements 3 derart führt, dass der Luftstrom durch den Luftströmungskanal hindurchströmt, wenn das Testelement 3 in einer Durchströmposition angeordnet ist. Das Luftführungselement ist dabei vorzugsweise beweglich angeordnet.

Eine Ausführungsform eines derartigen Luftführungselements ist in Figur 4 gezeigt. Das Luftführungselement 41 ist eine verstellbare Regelklappe 42, die beispielsweise um eine Schwenkachse verschwenkt werden kann. Hierdurch lässt sich die auf die Venturianordnung 29 zuströmende Luft steuern und komprimieren. Der von dem Lüfter 14 erzeugte Luftstrom wird dann sehr gezielt in den Einlass des Luftströmungskanals 25 geleitet. Selbstverständlich sind auch andere Luftführungselemente 41 denkbar, beispielsweise Klappen, die nicht wie die Regelklappe 42 vertikal, sondern horizontal verschwenkbar sind, also um eine vertikale Achse, verschwenkt oder gedreht werden. Auch ist es möglich, den Boden oder die Decke des Aufnahmeraums 13 zu neigen, anzuheben oder abzusenken, um den für die extern erzeugte Luftströmung zur Verfügung stehenden Raum zu verändern. Auch hierdurch lässt sich die Saugwirkung, die durch die Venturidüse 28 in dem Analysefunktionskanal 16 des Testelements 3 erzeugt wird, verändern und steuern.

Durch die Verwendung eines externen Lüfters 14, der beispielsweise Teil einer Temperiereinheit zum Heizen des Testelements oder der Flüssigkeitsprobe sein kann, besteht die Möglichkeit, auch im Stillstand des Testelements 3 einen Luftstrom zu erzeugen, der durch den Luftströmungskanal 25 strömt und so eine Flüssigkeit steuert. In den Analysefunktionskanälen 16 des Testelements 3 wird eine Flüssigkeit dann nur durch die aufgrund des erzeugten Unterdrucks in der Venturianordnung 29 entstehende Saugwirkung oder durch Kapillarkräfte bewegt. Eine Zentrifugalkraft aufgrund der Rotation des Testelements findet in diesem Fall keine Anwendung.

Bevorzugt ist die Durchströmposition, in der sich das Testelement 3 befindet, wenn ein extern erzeugter Luftstrom durch den Luftströmungskanal 25 strömt, gleich der Dosierposition, in der eine Flüssigkeit in eine Zugabeöffnung 11,12 dosiert wird. Auf diese Weise kann eine einfache und zuverlässige Entlüftung des Analysefunktionskanals 16 erzielt werden. Es ist jedoch auch möglich, dass sich das Testelement 3 bewegt, während der Luftstrom des Lüfters auf die Venturianordnung 29 wirkt. Je nach Steuerung und Lenkung des externen Luftstroms kann der durch die Rotationsbewegung hervorgerufene Unterdruck in den Analysefunktionskanal 16 verstärkt oder geschwächt werden, um die Bewegung der Flüssigkeit im Kanal 16 zu ändern bzw. zu steuern.

## Patentansprüche

1. Testelement zur Analyse einer Körperflüssigkeitsprobe auf einen darin enthaltenen Analyten mit
einem Gehäuse (15)und einem von dem Gehäuse (15) umschlossenen Analysefunktionskanal (16),
einem Luftströmungskanal (25) mit zwei Erweiterungsabschnitten (26a,b) und einem zwischen diesen Erweiterungsabschnitten (26a,b) angeordneten engen Abschnitt (27), wobei
die Erweiterungsabschnitte (26a,b) jeweils eine im Vergleich zu dem engen Abschnitt (27) in Richtung von diesem weg zunehmende Querschnittsfläche aufweisen, und
zwischen dem engen Abschnitt (27) und dem Analysefunktionskanal (16) ein Verbindungskanal (24) derart angeordnet ist, dass der enge Abschnitt (27) und der Analysefunktionskanal (16) in Luftaustauschverbindung zueinander stehen, so dass ein mittels einer durch den Luftströmungskanal (25) fließenden Luftströmung erzeugter Unterdruck auf den Analysefunktionskanal (16) wirkt.

2. Testelement nach Anspruch 1, **dadurch gekennzeichnet, dass** der Analysefunktionskanal (16) wenigstens einen mikrofluidischen Kanalabschnitt hat.

3. Testelement nach einem der vorhergehenden Ansprüche, **dadurch gekennzeichnet, dass** das Testelement (3) um eine Rotationsachse rotierbar ist, die sich durch das Testelement (3) erstreckt, und
der Luftströmungskanal (25) derart ausgerichtet ist, dass während der Rotation des Testelements (3) die Umgebungsluft durch den Luftströmungskanal (25) strömen kann.

4. Testelement nach einem der vorhergehenden Ansprüche, **dadurch gekennzeichnet, dass** der Luftströmungskanal (25) an einer Oberseite und/oder einer Unterseite (40) des Gehäuses (15) des Testelements (3) angeordnet ist.

5. Testelement nach einem der vorhergehenden Ansprüche, **dadurch gekennzeichnet, dass** der erzeugte Unterdruck auf eine Flüssigkeit, insbesondere eine Körperflüssigkeitsprobe, in dem Analysefunktionskanal (16) derart wirkt, dass **dadurch** eine Bewegung der Flüssigkeit in dem Analysefunktionskanal (16) steuerbar ist.

6. Testelement nach Anspruch 5, **dadurch gekennzeichnet, dass** die Bewegung der Flüssigkeit in dem Analysefunktionskanal (16) in eine vorbestimmte Richtung und/oder mit einer vordefinierten Geschwindigkeit erfolgt.

7. Testelement nach einem der vorhergehenden Ansprüche, **dadurch gekennzeichnet, dass** sich der an den engen Abschnitt (27) anschließende Erweiterungsabschnitt (26a,b) stetig erweitert.

8. Testelement nach einem der vorhergehenden Ansprüche, **dadurch gekennzeichnet, dass** der Verbindungskanal (24) ein Entlüftungskanal (30) ist, der bevorzugt hydrophob ist.

9. Testelement nach einem der vorhergehenden Ansprüche, **dadurch gekennzeichnet, dass** der Analysefunktionskanal (16) ein Probenanalysekanal (17) ist, der eine Probenzugabeöffnung (11) und eine Messzone (19) einschließt.

10. Analysesystem zur Analyse einer Körperflüssigkeitsprobe auf einen darin enthaltenen Analyten umfassend
ein Testelement (3), das jeweils ein Gehäuse (15) und einen von dem Gehäuse (15) umschlossenen Analysefunktionskanal (16) aufweist, und
ein Auswertegerät (2) mit einer Messstation (6) zum Messen einer für das Analyseresultat charakteristischen Messgröße an der Messzone (19) des Testelements (3) und mit einer vorzugsweise rotierbaren Halterung zum Halten eines Testelements (3),
**dadurch gekennzeichnet, dass**
- das Testelement (3) einen Luftströmungskanal (25) mit zwei Erweiterungsabschnitten (26a,b) und einem zwischen diesen Erweiterungsabschnitten (26a,b) angeordneten engen Abschnitt (27) aufweist, wobei die Erweiterungsabschnitte (26a,b) eine im Vergleich zu dem engen Abschnitt (27) in Richtung von diesem weg zunehmende Querschnittsfläche aufweisen, und
- ein Verbindungskanal (24) zwischen dem engen Abschnitt (27) und dem Analysefunktionskanal (16) derart angeordnet ist, dass eine Luftaustauschverbindung gebildet wird,
- der Luftströmungskanal (25) derart angeordnet ist, dass ein mittels einer durch den Luftströmungskanal (25) fließenden Luftströmung erzeugter Unterdruck auf den Analysefunktionskanal (16) wirkt.

11. Analysesystem nach Anspruch 10, **dadurch gekennzeichnet, dass** das Auswertegerät (2) einen Lüfter (14) umfasst, der einen Luftstrom erzeugt, und
der Luftstrom durch den Luftströmungskanal (25) hindurchströmen kann, um den Unterdruck zu erzeugen, der auf den Analysefunktionskanal (16) wirkt.

12. Analysesystem nach Anspruch 11, **dadurch gekennzeichnet, dass** der Lüfter (14) Teil einer Temperiereinheit ist, die zum Heizen des Testelements (3), der Flüssigkeitsprobe oder eines anderen flüssigen Mediums dient.

13. Analysesystem nach Anspruch 11 oder 12, **dadurch gekennzeichnet, dass** das Analysegerät (2) ein vorzugsweise bewegliches Luftzuführungselement (41) einschließt, welches den von dem Lüfter (14) erzeugten Luftstrom in Richtung des Luftströmungskanals (25) des Testelements (3) derart führt, dass der Luftstrom durch den Luftströmungskanal (25) hindurchströmt, wenn das Testelement (3) in der Durchströmposition ist.

14. Analysesystem nach Anspruch 10 bis 13, **dadurch gekennzeichnet, dass** in einer Dosierposition des Testelementes (3) in dem Analysegerät (2) eine Flüssigkeit in eine Probenzugabeöffnung (11) des Analysefunktionskanals (16) mittels einer Dosierstation (9) dosiert wird, und
die Dosierposition vorzugsweise gleich einer Durchströmposition des Testelements (3) ist, in der das Testelement (3) in dem Auswertegerät (2) derart angeordnet ist, dass eine Luftströmung durch den Luftströmungskanal (25) hindurchströmen kann.

15. Verfahren zum Steuern der Bewegung einer in einem Kanal eines Testelements zur Analyse einer Körperflüssigkeitsprobe enthaltenen Flüssigkeit, wobei
das Testelement (3) umfasst:
ein Gehäuse (15),
einen von dem Gehäuse (15) umschlossenen Analysefunktionskanal (16),
einen Luftströmungskanal (25) mit zwei Erweiterungsabschnitten (26a,b) und einem zwischen diesen Erweiterungsabschnitten (26a,b) angeordneten engen Abschnitt (27), wobei die Erweiterungsabschnitte (26a,b) jeweils eine im Vergleich zu dem engen Abschnitt (27) in Richtung von diesem weg zunehmende Querschnittsfläche aufweisen,
und einen Verbindungskanal (24), der zwischen dem engen Abschnitt (27) und dem Analysefunktionskanal (16) derart angeordnet ist, dass der enge Abschnitt (27) und der Analysefunktionskanal (16) in Luftaustauschverbindung zueinander stehen,
**gekennzeichnet durch** folgende Schritte:
- Erzeugen einer Luftströmung,
- Lenken der Luftströmung **durch** den Luftströmungskanal (25) derart, dass die Luftströmung **durch** den engen Abschnitt (27) strömt,
- Erzeugen eines Unterdrucks in dem Verbindungskanal (24), der auf dem Analysefunktionskanal (16) derart wirkt, dass die darin enthaltene Flüssigkeitsprobe in ihrer Lage beeinflusst wird.
